# EUROPEAN PATENT APPLICATION

(11) **EP 2 113 488 A1**
(43) Date of publication of application: **04.11.2009**
(21) Application number: 09156878.2
(22) Date of filing: 31.03.2009
(51) Int. Cl.: C02F 1/50, C02F 1/72, C02F 1/76, A01N 25/08, A01N 59/00, C02F 1/28, C02F 1/68, C02F 1/52

(54) **Disinfection composition and process**

(30) Priority: 28.04.2008 IN MU09302008; 17.06.2008 EP 08158413
(71) Applicant: Unilever N.V., 3013 AL Rotterdam (NL); Unilever PLC, London EC4Y 0DY (GB)
(72) Inventor: Mahapatra, Samiran, 560 066, Bangalore (IN); Samadder, Satyajit, 560 066, Bangalore (IN); Soman Nair, Prasanth, C, 560 066, Bangalore (IN)
(74) Representative: Cromsigt, Jenny

(57) **Abstract**

The invention relates to a composition and a process for disinfection, and particularly for purification of contaminated water. The invention is especially useful for removal of suspended impurities and harmful microbial contaminants like bacteria, viruses and cysts from water to make it healthy and palatable for human consumption.

The invention provides a disinfection process and composition, the composition comprising an oxidising biocide and a delayed release biocide quencher, comprising an anion which is a reducing agent.

## Description

### FIELD OF THE INVENTION

The invention relates to a composition and a process for disinfection, and particularly for purification of contaminated water. The invention is especially useful for removal of suspended impurities and harmful microbial contaminants like bacteria, viruses and cysts from water to make it healthy and palatable for human consumption.

### BACKGROUND AND PRIOR ART

There are many operations where disinfection is desired. Disinfection means inactivation of germs which may be harmful to humans. Disinfection operations include purification of water for many purposes e.g. potable purposes, cleaning operations at home, industrial operations in manufacturing units, biotechnology and biomedical processes and also in maintaining hygiene in public places like hospitals, nursing homes, and for cleaning of instruments used in surgery. In all of these operations, certain disinfectants or biocides are used. After such use, once the biocidal/disinfection action is complete, it is desirable to remove all traces of residual disinfectant/ biocides to ensure minimal side-effect on the people using the material/substrates disinfected. Thus all disinfection processes are two step to make the processes consumer friendly, first involving disinfection and the second involving removal of the residual disinfectants.

Purification of water for potable purposes is one of the most important disinfection processes. There are billions of people, who have to depend on unpurified water for potable purposes. They usually reside in the underdeveloped and developing countries, especially in the rural areas. Municipal water treatment systems which pipe purified water to households are generally not available in these areas. People in such areas have to collect the water from sources like rivers, wells, lakes, streams and bore-wells in pots and store them in their homes for both cooking and drinking. Such water is often infected with harmful micro-organisms like cysts, viruses and bacteria. The mortality and morbidity rate especially in infants and small children is high in these areas due to the consumption of such contaminated water.

During the course of about last half century, the situation in such areas has improved due to better education and economic status of the people. People are generally becoming aware that boiling of water makes it microbiologically safe; but boiling of water is expensive, cumbersome and requires availability of fuel like coal, kerosene or wood which are increasingly becoming scarce and expensive. Advanced home purification systems like UV (ultra-violet), RO (reverse-osmosis) etc require continuous flow of water and availability of electricity. Both of these are often not available on a continuous basis in these areas. Thus, there has always been a need to provide a simple, easy-to-use, inexpensive and safe method to meet the drinking water requirement for these people.

Heath Departments in many countries provide halogen based disinfectants for inactivation of the micro-organisms in water. Such disinfectants include iodine, iodinated resins, chlorine compounds like calcium hypochlorite, sodium dichloro isocyanuric acid (NaDCCA), trichloroisocyanuric acid (TCCA) etc. These disinfectants are very effective in inactivating micro-organisms but the residual halogen in the water often leaves an unpleasant taste or odour making the water unpalatable. A disinfectant-quencher has been suggested to solve this problem.

WO02/00557 (P&G) describes a water purification composition comprising essentially a primary coagulant, a bridging flocculent, a coagulant aid and optionally a disinfectant. This patent application also claims a method for clarifying and purifying water, which comprises several stages selected from coagulation and flocculation, disinfection, filtration, neutralisation and nutrifying. This publication describes use of a biocide which is provided in delayed release mode with respect to the coagulant and flocculant. A method is also described which includes a neutralisation stage in which the drinking water is brought into contact with a disinfectant neutralisation agent subsequent to the separation stage to reduce or remove excess disinfectant prior to use. In the case of chlorine based disinfectants, suitable neutralisation agents listed are activated carbon and reducing agents such as sodium thiosulphate, sodium sulphite, hydrogen peroxide and sodium percarbonate.

Thus it is known that one could use compounds that react with the biocide to render the water free of the biocide. To enable this, however, there are technical problems to be overcome. The biocidical action takes a finite amount of time which depends on the concentration of the biocide and to a small extent on the concentration of the microorgnisms. Hence if the biocide quencher is released too fast into the water, adequate biocidal action does not take place. On the other hand, biocide quenching should happen fast enough so that the consumers do not have to wait inordinately long before they can consume the water. Hence it is desirable that the biocide is quenched in a reasonable amount of time, of about 2 to 30 minutes.

It is possible to provide the biocide and the biocide quencher in separate packaging with the instruction to the consumer to dose the biocide quencher into the water a pre-determined amount of time after the biocide is added to the water as is suggested in WO02/00557. This involves manual intervention which is cumbersome and not liked by the consumer. Moreover, if consumer does not follow the instruction properly and adds the quencher soon after or before the biocide, the aim of the biocidal action will not be accomplished. It is desirable from the viewpoint of convenience to the consumer to add both the biocide and the biocide quencher simultaneously into the water to be purified microbiologically.

The present inventors have been working to solve this problem of providing a composition that can be added to the water in a single stage which ensures that the water is purified to the desired levels and that the residual biocide is quenched before the water is consumed by the user. After trying a very large number of possible approaches, they developed a composition comprising an oxidising biocide and a biocide quencher which is a specific layered double hydroxide compound comprising specific anions.

Thus, it is one object of the invention to provide for a composition for purifying water contaminated with harmful micro-organisms while ensuring that the water is relatively safer and palatable to consume.

It is another object of the present invention to provide for a composition for purifying water contaminated with harmful micro-organisms which provides for 6 log removal of bacteria, 4 log removal of virus and 3 log removal of cysts.

It is yet another object of the present invention to provide for a composition for purifying water using a biocide which on the one hand is effective in inactivation of microorganisms while on the other hand the biocide is quenched before the water is consumed.

It is yet another object of the present invention to provide for a process to prepare layered double hydroxide compounds which have a reducing agent in it for use in a water purification composition.

It is yet another object of the invention to provide for a method to purify water to make it microbiologically safe as well as palatable to consume.

After trying a large number of possible approaches, the present inventors have developed a composition comprising an oxidising biocide and a biocide quencher which is a specific layered double hydroxide compound comprising specific anions.

Although the present invention has been developed with objects of purifying water, the present inventors realised that the composition and process are equally suitable for any disinfection purpose.

### SUMMARY OF THE INVENTION

Thus, according to the first aspect of the present invention there is provided a disinfection composition comprising
(i) an oxidising biocide and
(ii) a delayed release biocide quencher which is a compound having the general formula (M₁²⁺)ₓ(M₂³⁺)_{y}(OH)_{2x+2y}(A^{z-})_{y/z}. nH₂O
where, M₁²⁺ is a divalent cation and M₂³⁺ is a trivalent cation, A is an anion which is a reducing agent and x has a value from 0.1 to 10.0, y has a value from 0.1 to 5.0, n has a value between 0 to 10.0, z has a value from 1.0 to 4.0.

The composition is especially useful for purification of water.

It is particularly preferred that the anion "A" is thiosulphate or ascorbate.

### DETAILED DESCRIPTION OF THE INVENTION

All parts herein are by weight unless otherwise specified.

The invention provides for a composition for disinfection especially for purification of water using an oxidising biocide. The oxidising biocide, after inactivating the microorganisms, are quenched or made ineffective using a biocide quencher. The biocide quencher as per the present invention is a layered double hydroxide (LDH) compound which has an anion in it which is a reducing agent. The LDH compound as per the present invention has the formula (M₁²⁺)ₓ(M₂³⁺)_{y}(OH)_{2x+2y}(A^{z-})_{y/z}. nH₂O
where, M₁²⁺ is a divalent cation and M₂³⁺ is a trivalent cation, A is the anion which is a reducing agent and x has a value from 0.1 to 10.0, y has a value from 0.1 to 5.0, n has a value between 0 to 10.0, z has a value from 1.0 to 4.0.

By the term "biocide quencher" is meant a material when added to water comprising a biocide, reduces the concentration of the biocide in water. By the term "delayed release biocide quencher" it is meant a biocide quencher when added to water comprising a biocide, concentration of the biocide does not reduce to zero for at least one minute. Preferably the biocide concentration is at least 20% of the initial concentration after a minute of addition of the biocide quencher.

By the term reducing agent is meant a compound having a redox potential preferably less than 1.4 V, more preferably less than 1.0 V, further more preferably less than 0.5 V with respect to Standard Hydrogen Electrode (ref: Electrochemical series, CRC Handbook of Chemistry and Physics, 80th Edition, pp. 8-21 to 8-31). Preferably, the reducing agents are selected from the group consisting of C2-12 hydroxycarboxylic acids and salts thereof, and one or more inorganic salts selected from sulfites, bisulfites, metabisulfites and thiosulfates. Preferably the inorganic salts are of alkali metal, alkaline earth metal, or ammonium. Preferred organic acid salts are citrates and ascorbates.

By the term oxidising is meant a material that has a redox potential of preferably greater than 0.5 V, more preferably greater than 0.8 V, further more preferably greater than 1.0 V with respect to Standard Hydrogen Electrode. The oxidising biocide preferably has a redox potential which is at least 200 mV higher than the redox potential of the reducing agent used in the composition of the invention.

In the above LDH compound, the preferred divalent cations are magnesium, zinc or calcium. More preferably the divalent cation is zinc. The preferred trivalent cation in the LDH compounds is aluminium. The preferred LDH compounds have the following combination of cations:

Zn²⁺ -Al³⁺, Mg²⁺ -Al³⁺, Ca²⁺ -Al³⁺.

Although it is essential that the LDH compound has at least one divalent cation and one trivalent cation, it is possible that the LDH compound has more than one divalent cations and more than one trivalent cations.

The preferred range of "x" in the LDH of the invention is from 1 to 9 with the most preferred value being 6. The preferred range of "y" in the LDH of the invention is from 0.5 to 4 with the most preferred value being 2. The preferred range of "n" in the LDH of the invention is from 2 to 10 with the most preferred value being 4.

Thus, the most preferred LDH compounds as per the invention have the general formulae:

Zn₆Al₂(OH)₁₆(A). 4H₂O,

Mg₆Al₂(OH)₁₆(A). 4H₂O,

or Ca₆Al₂ (OH)₁₆(A). 4H₂O,

The anion "A" as per the invention is a reducing agent. Most suitable anions are ascorbate and thiosulphate. It is preferred that the LDH compound of the invention is substantially free of the carbonate anion. One way to achieve this is not to use an alkali metal carbonate or bicarbonate during the precipitation reaction for formation of the LDH. Another way to achieve this is to prepare the LDH compound with any anion (which may also be carbonate) followed by calcining the LDH at high temperatures. Suitable temperature for calcination is from 350 to 700 °C.

The delayed release biocide quencher is preferably encapsulated in a water soluble polymer. Suitable water soluble polymers include poly vinyl alcohol, polyethylene oxide, hydroxyethyl cellulose, guar gum or modified starch. The most suitable water soluble polymer for encapsulating the biocide quencher is polyvinyl alcohol.

The oxidising biocide as per the present invention is preferably a halogen compound. More preferred halogen compounds are those of chlorine or iodine, more preferably those of chlorine. Suitable chlorine compounds are inorganic compounds like sodium hypochlorite, calcium hypochlorites, chlorine dioxide, or chloramines, or organic chlorine compounds like sodium dichloro-isocyanurates, or trichloroisocyanuric acid. Alternately the biocide may be iodine, or a tri iodide or pentaiodide resin. Most preferred biocide is calcium hypochlorite..

In its optimum operation, the oxidising biocide and anion of the quencher are present in a 1:1 molar ratio assuming that all of the anion present in the LDH is released into the aqueous medium for quenching the residual biocide. However, a larger amount of LDH may be required to be present if the release of the anions present is less than 100% of that theoretically possible. In the present invention, the weight ratio of the biocide to the biocide quencher, is preferably in the range of 1:1 to 1:20, more preferably in the range of 1:2 to 1:10.

A preferred composition as per the invention additionally comprises a coagulating agent which is a water soluble inorganic metal salt having trivalent cation and a flocculating agent which is a high molecular weight water soluble polymer.

The coagulating agent is a compound which is a water-soluble inorganic metal salt having trivalent cation. Suitable trivalent cations are Al³⁺ and Fe³⁺. The coagulant is generally free from carbon atoms. Examples of coagulating agents are ferric sulfate, aluminium sulfate and polyaluminium chloride. The coagulating agent is preferably present in an amount in the range of from 5 to 60%, more preferably from 15 to 50% by weight of the composition.

The flocculating agent is a compound which is a high molecular weight water soluble polymer. Examples of suitable flocculating agents are polysaccharides (dextane celluloses), proteins, modified celluloses (hydroxyethyl/hydroxypropyl or carboxymethyl), and polyacrylamides preferably high molecular weight polyacrylamide. It is especially preferred that the polyacrylamide is either anionic or non-ionically modified, more preferably anionically modified. Suitable molecular weights of these polyacrylamides are in the range of 10⁵ to 10⁷. A preferred amount of the flocculating agent is from 0.5 to 15%, more preferably from 1 to 10% and most preferably from 2 to 8% by weight of the composition.

The purification action of the composition of the invention can be attained at the pH of the raw water available. As a preferred aspect, the pH of the composition may be adjusted to the desired range of 6 to 8 by including a buffering agent in the composition. Suitable buffering agents are calcium oxide, sodium carbonate or sodium bicarbonate. The buffering agent when present is included in an amount in the range of 0.5 to 50% by weight of the composition.

The water purification composition may optionally comprise an adsorbent. The adsorbent is preferably a material which is capable of adsorbing high levels of organic or inorganic compounds. Suitable adsorbents are clays. Examples of clay include Montmorillonite clay (dioctheydral smectite clay), Laponite, Hectorite, Nontronite, Saponite, Volkonsite, Sauconite, Beidellite, Allevarlite, Illite, Halloysite, Attapulgite, Mordenite, Kaolines, and Bentonite. A highly preferred clay as per this invention is Bentonite clay. When included, adsorbents are present in an amount in the range of 5 to 75%, more preferably from about 10 to 60% by weight of the composition.

The water purification composition preferably has a moisture content of not more than 5%, more preferably not more than 3%, and most preferably not more than 2% by weight of the composition.

According to a preferred aspect of the invention when the water purification composition comprises the biocide, the biocide quencher, the coagulating agent and the flocculating agent, the biocide is present in amount of 1 to 30%, preferably in amount of 2 to 15% by weight of this composition; and the biocide quencher is present in 10 to 55%, preferably in amount of 20 to 50% by weight of the composition.

The water purification composition is preferably packed in two portions which are spatially separated wherein the first portion comprises the oxidising biocide and the second portion comprises the delayed release biocide quencher. This is to ensure that the two components do not react with each other during storage, transportation and up until the time of use by the consumer. The two portions may be packed in a two compartment sachet for the sake of convenience to the consumer. When the flocculating agent is present in the composition of the invention, it is preferred that it is present in the second portion. When an adsorbent is present, it may be included in both the first portion and the second portion or may be present in any one of the portions.

The solid form is the most suitable form of the composition of the invention. Suitable solid forms include powder, granule and tablet forms, most preferred form being the powder form. When delivered as two portions, the most preferred form is the powder form in both the first portion and the second portion.

The composition of the invention is preferably delivered in amounts in the range of 0.5 to 10 grams more preferably in the range of 1 to 5 gram. These are usually added to 5 to 20 litre of water. When delivered in two portions, suitable weight of the first portion is 0.01 to 5 gram, more preferably 0.1 to 1.5 gram and suitable weights of the second portion is 0.5 to 10 gram.

The disinfection composition of the invention may be delivered to the consumer in any known suitable packaging form. When formed as tablets, the packaging may be metallised laminate or blister packing. When formed as powders, suitable packaging is metallised laminate. However the metallised laminate packaging has to be such that the oxidising biocide that usually reacts with metals is kept separated from the metal part of the laminate by use of suitable polymeric layers on the metal layer.

A highly advantageous aspect of the present invention is that the entire composition, if packed in a single portion or when packed in two portions, can be added to the water to be purified in one go i.e the entire composition is added to the water simultaneously.

Thus, the method for purifying contaminated water comprises the steps of (i) contacting contaminated water with a composition of the invention followed by (ii) separating the insoluble matter from the water. The first step of contacting the composition with the contaminated water needs to be carried out for short time i.e for one or two minutes only preferably with stirring. The insoluble matter is then usually allowed to settle, a step that takes about 5 to 30 minutes, preferably 5 to 20 minutes after which the insoluble matter is separated from the water, to obtain purified water. When the composition of the invention comprises only the biocide and the biocide quencher, the biocide quencher being an LDH compound is the only water insoluble matter and this tends to settle down. When the composition comprises a coagulating agent and a flocculating agent, the action of microbial inactivation takes place along with the flocculation of the dispersed impurities in the water causing large flocs to form which settle down faster. These large flocs can be easily separated from the water by decantation or by using a simple muslin cloth.

The present inventors have determined that the composition of the invention is very effective in inactivating or separating the most harmful microorganisms like bacteria, virus and cysts. Thus according to yet another aspect of the present invention there is provided use of the composition of the invention for purifying contaminated water for 6 log bacteria removal, 4 log virus removal and 3 log cyst removal.

Many processes to prepare layered double hydroxide can be adapted to prepare the delayed release biocide quencher of the invention. Thus, a suitable composition of the invention comprises a delayed release biocide quencher which is prepared by a process comprising a step of reacting a layered double hydroxide (LDH) compound with a reducing agent, the LDH compound is prepared by a precipitation step comprising reacting a salt having trivalent cation and a salt having divalent cation with an alkaline compound.

The precipitate is preferably filtered and washed to be made substantially free of salts. The LDH which is thus filtered forms a we cake. The wet cake may then be used as such for reaction with the reducing agent, if necessary. If the reaction with the reducing agent has already taken place, the wet cake is dried by any known drying method / equipment to prepare a fine dry powder which is the delayed release biocide quencher of the invention.

There are many possible combination of process steps which may be carried out to prepare the LDH compound of the composition. One suitable pH range at which the precipitation reaction may be carried out is in the range of 9.5 to 11 and another suitable pH range is from 6 to 8. Preferred alkaline compounds are alkali metal hydroxide and alkali metal carbonate most suitable being sodium hydroxide or sodium carbonate. The reducing agent may be added simultaneously with the alkaline compound during the precipitation reaction or subsequently. When the reducing agent is added subsequent to the precipitation reaction, this is usually done after the LDH compound formed by the precipitation reaction is washed and filtered substantially free of salts. It is preferred that the LDH compound is substantially free of the carbonate anion. This is usually ensured by drying the washed and filtered precipitate followed by a step of calcination. The LDH compound may then be dispersed in water with addition of the reducing agent to form a slurry. This slurry is then usually agitated for desired amount of time to enable the anion of the reducing agent to bind to the LDH framework. The precipitation reaction has been tried at many temperatures and temperatures from 20 to 100 °C have been found suitable for preparing the LDH compound for use in the composition of the invention. Many combinations of the above process conditions may be suitably combined to prepare the LDH compound.

One preferred reaction for preparing the delayed release biocide quencher for incorporation in the composition of the invention comprises an alkaline compound which is sodium hydroxide to react with the LDH compound which is formed in a precipitation reaction which is carried out at a temperature in the range of 40 to 50 °C and a pH of 6 to 8 and wherein the reducing agent is added to the reaction mixture simultaneously with the sodium hydroxide.

The above process is a single step reaction where the salts having divalent cation and trivalent cation are taken together with the alkali metal hydroxide and the reducing agent, all at the same time for the reaction to form a precipitate of LDH with the anion of the reducing agent bonded on to the LDH framework. This reaction step being a single step process makes it highly convenient in preparing the water purification composition of the invention.

Another preferred process comprises the following steps: (i)Precipitating a layered double hydroxide compound by reacting a salt having trivalent cation and a salt having divalent cation with an alkaline metal hydroxide preferably sodium hydroxide and the precipitation reaction is carried out at a temperature in the range of 90 to 100 oC and a pH of 9.5 to 11; and wherein the (ii) LDH compound filtered and washed to be made substantially free of salts is reacted with a reducing agent at a pH of 6 to 8.

Yet another preferred process comprises an alkaline compound which is sodium carbonate in which the precipitation step is carried out at a pH in the range of 9.5 to 11 wherein the process additionally comprises the step of calcining the LDH compound followed by the step of reaction of the calcined compound with the reducing agent.

Thus, a highly suitable process to prepare the layered double hydroxide compound having a reducing agent comprises the steps of (i) precipitating a layered double hydroxide compound by reacting a salt having trivalent cation and a salt having divalent cation with an alkaline metal carbonate at a pH in the range of 9.5 to 11, at a temperature in the range of 90 to 100 °C (ii) filtering and washing the precipitate substantially free of salts (iii) calcining the precipitate to remove carbonate and (iv) reacting the calcined powder with an aqueous solution of the reducing agent to form the delayed release biocide quencher. The last step is preferably carried out in an inert atmosphere which may be achieved by using nitrogen blanketing in the headspace of the reactor.

The above process is a three step process which also is useful in preparing the LDH of the invention which has a reducing agent in it. The first step causes formation of the LDH compound where the anion is carbonate. It is preferred that the water purification composition of the invention is substantially free of the carbonate form of the LDH. This can be achieved by first preparing the carbonate form followed by calcination which is believed to form a mixed metal oxide compound. The calcination may be carried out at a temperature in the range of 300 to 700 °C, preferably in the range of 450 to 550 °C. The calcined compound is then regenerated into an LDH compound having the anion of the reducing agent in it, by reacting the calcined powder with an aqueous solution of the reducing agent. The reaction is believed to be an equilibrium reaction. After the reaction has equilibrated to a state where maximum amount of anion exchange has taken place, the LDH compound is preferably filtered, washed with water to be substantially free of salts and dried to a powder.

The above described processes for preparing an LDH compound having an anion of a reducing agent is suitable for anion like thiosulphate.

A two step reaction process for preparing an LDH compound having an anion of a reducing agent which is reactive in alkaline medium has been developed for use in the composition of the invention. The process comprises the steps of (i) precipitating a layered double hydroxide compound by reacting a salt having trivalent cation and a salt having divalent cation with an alkali metal hydroxide at a pH in the range of 6.0 to 7.5 (ii) filtering and washing the precipitate free of salts and (iii) reacting the layered double hydroxide compound with the reducing agent to form the delayed release biocide quencher. The precipitation step is preferably carried out in an inert atmosphere which may be achieved by using nitrogen blanketing in the headspace of the reactor.

The step (i) in the above reaction is a step where the salts having divalent cation and trivalent cation are taken together with the alkali metal hydroxide for the reaction to form a precipitate of LDH with the hydroxide anion present in the LDH. In the above reaction, the salt having the divalent cation and the salt having the trivalent cation may have anions like nitrate, sulphate, sulphate, halides, and acetate. The precipitation reaction is preferably carried out at a temperature in the range of 20 to 50 °C. After the LDH compound has been formed, it is washed with sufficient amount of water to make it low in residual salts and alkalinity. The LDH compound is than reacted with the reducing agent in aqueous media to entrap the anion of the reducing agent in the LDH. This step is preferably carried out at lower temperatures in the range of 20 to 50 °C and further preferably in a nitrogen atmosphere. The above described process is especially useful for preparing an LDH having a reducing agent which is reactive in alkaline media. This anion is preferably ascorbate. The LDH compound thus prepared is then preferably dried using any known method /equipment to form a powder.

In all of the above described processes, in the step (i), salts of the divalent and trivalent metal ions in desired molar ratio are dissolved in water. Thus, if the value of x of 6 and a value of y of 2 is desired, the mole ratio of the bivalent to the trivalent metal salt is taken as 3:1. Suitable salts include the nitrates, sulphates, halides or acetates. Suitable alkalis as mentioned in each of the processes e.g. alkali metal carbonate, bicarbonate or hydroxide or compounds like ammonia or urea may be used for precipitating the LDH. The alkali solution is also usually heated to the same temperature as the salt solution. The salt solution and the alkali solution are preferably added to a vessel simultaneously with vigorous stirring. After the precipitation is complete, the temperature of the solution is usually maintained at the same temperature for some time preferably at least 15 minutes, more preferably at least one hour. The precipitate is then washed to be substantially free of dissolved salts, filtered preferably under vacuum, and dried.

According to another aspect of the invention there is provided a method for purifying water comprising the steps of (i) mixing the composition of the invention with the water to be purified and (ii) separating the insoluble matter from the mixture.

When the composition of the invention comprises a biocide and a flocculating/coagulating agent, the method comprises the steps of (i) contacting the contaminated water with a biocide either simultaneously or followed by; (ii) contacting the contaminated water with the coagulating /flocculating agent to form flocs; and (iii) separating the flocs from the water. The LDH compound may be added during either or both steps.

The invention will now be illustrated by the following non-limiting examples.

### Examples

The following experiments were carried out to demonstrate the superiority of the composition of the invention as compared to compositions of the prior art.

### Examples 1 to 4 Improvement in the rate of biocide quenching with LDH compounds of the invention

In the Examples 1 to 3 the test water consisted of taking twelve litre of water to which 0.18 gram of calcium hypochlorite (having 65% available chlorine) was added and stirred to dissolve all of the calcium hypochlorite. In Example 4, 9.5 gram/litre of iodine was added instead of the calcium hypochlorite.

### Example -1: The concentration of chlorine in the test water was measured at certain times intervals up to 15 minutes after the addition of the calcium hypochlorite.

### Example -2:

To the test water, 0.18 gram of sodium thiosulphate was added and stirred to dissolve all of it. The concentration of chlorine in the water was measured.

### Example-3:

A biocide quencher which is Zn₆Al₂(OH)₁₆(A). 4H₂O where A is thiosulphate was prepared by using the following procedure:

Zinc nitrate hexa hydrate (44.6 gram) and aluminium nonahydrate (18.75 gram) were mixed to form a mixture of 3:1 molar ratio. A 500 ml solution was prepared of this mixture in water. About 600 ml of a 1.5 molar solution of sodium carbonate was prepared. The two solutions were heated to a temperature of 90 - 100 °C and each were simultaneously added to a precipitation vessel while maintaining the precipitation vessel at a temperature of 90 - 100 °C and to a pH of about 11. The precipitate was filtered under vacuum, washed substantially free of dissolved salts and dried to a moisture content of less than 5 wt%. The precipitate was then calcined at a temperature of 500 °C for 6 hours. The calcined material (10 gram) was cooled and mixed with a solution of 5 gram of sodium thiosulphate pentahydrate in 75 ml water to form a slurry. The slurry was agitated for 6 hours at 25 °C and aged for 24 hours in a vessel maintained in nitrogen atmosphere. The slurry was then filtered and the wet cake was washed to be substantially free of dissolved salts using de-ionized water. The wet cake was dried under vacuum to a moisture content of less than 5 wt%.

An FTIR spectra of the LDH compound thus prepared was obtained and this is shown in Figure -1 which shows a peak at ∼ 1130 cm ⁻¹ that confirms the presence of the thiosulphate anion in it. To the 12 litre test water, 1.2 gram of the biocide quencher as prepared above was added and stirred. The concentration of chlorine in the test water was measured at various intervals over 15 minutes.

### Example -4

To the 12 litre test water, 2.4 gram of the biocide quencher as prepared for Example-3 was added and stirred. The concentration of iodine in the test water was measured at various intervals over 15 minutes.

The procedure for measurement of chlorine and iodine content in water is given below:

Available chlorine or iodine was analyzed by iodometric method in accordance with *Standard Methods* (APHA, AWWA & WEF 2001, Standard Methods for the Examination of Water and Wastewater. 20th ed., Part 2130. Washington, DC: American Public Health Association/American Water Works Association and Water Environment Federation).

The data on the concentration of the biocide in the test water as a function of time for Examples 1 to 4 is summarised in Table - 1.

**TABLE - 1**

| Time, minute | Concentration of biocide in miligram/litre | | | |
|---|---|---|---|---|
| | Example -1 | Example - 2 | Example-3 | Example - 4 |
| 0 | 10.8 | 10.5 | 8.7 | 6.5 |
| 0.5 | 10.8 | 0 | Not measured | Not measured |
| 1 | 10.8 | | 6.6 | 2.6 |
| 3 | 10.8 | | Not measured | 0 |
| 5 | 10.8 | | 4.8 | |
| 10 | 10.8 | | 3.0 | |
| 15 | 10.5 | | 0 | |

The data in Table -1 indicates that inclusion of a biocide quencher of the invention (Examples 3 and 4) controls the concentration of biocide in water over desired time

### Example 5 to 7: Different types of biocide quenchers, process for their preparation and their efficacy

In the following experiments different types of biocide quenchers were prepared using different processes and the performance of each was checked to show the efficiency in controlling the concentration of biocide in water. In the Examples 5 to 7, the test water consisted of taking twelve litre of water to which 0.18 gram of calcium hypochlorite (having 65% available chlorine) was added and stirred to dissolve all of the calcium hypochlorite.

### Example - 5

A biocide quencher which is Mg₆Al₂(OH)₁₆(A). 4H₂O where A is thiosulphate was prepared using the procedure similar to that used for preparing the LDH compound prepared in Example-3 except that magnesium nitrate hexa hydrate (38.5 gram) was used instead of zinc nitrate hexa hydrate.

To the 12 litre test water, 3.6 gram of the biocide quencher as prepared above was added and stirred. The concentration of chlorine in the test water was measured at various intervals over 20 minutes.

### Example-6:

A biocide quencher which is Zn₆Al₂(OH)₁₆(A). 4H₂O where A is thiosulphate was prepared by using the following procedure:

Zinc nitrate hexa hydrate (44.6 gram) and aluminium nonahydrate (18.75 gram) were mixed to form a mixture of 3:1 molar ratio. A 500 ml solution was prepared of this mixture in water. About 600 ml of a 3 molar solution of sodium hydroxide was prepared. The two solutions were heated to a temperature of 90 - 100 °C and each were simultaneously added to a precipitation vessel while maintaining the precipitation vessel at a temperature of 90 - 100 °C under nitrogen atmosphere and to a pH of about 11. The precipitate was filtered under vacuum, washed substantially free of dissolved salts and dried to a moisture content of less than 5 wt%. The dried material (8 gram) was cooled and mixed with a solution of 4 gram of sodium thiosulphate pentahydrate in 75 ml water to form a slurry. The slurry was agitated for 6 hours at 25 °C and aged for 24 hours in a vessel maintained in nitrogen atmosphere. The slurry was then filtered and the wet cake was washed to be substantially free of dissolved salts using de-ionized water. The wet cake was dried under vacuum to a moisture content of less than 5 wt%.

To the 12 litre test water, 4.8 gram of the biocide quencher as prepared above was added and stirred. The concentration of chlorine in the test water was measured at various intervals over 20 minutes.

### Example - 7:

A biocide quencher which is Zn₆Al₂(OH)₁₆(A). 4H₂O where A is thiosulphate was prepared by using the following procedure:

Zinc nitrate hexa hydrate (29.75 gram) and aluminium nonahydrate (12.5 gram) were mixed to form a mixture of 3:1 molar ratio. A 500 ml solution was prepared of this mixture in water.

A mixture of 10.66 gram of sodium hydroxide (0.27 molar) and 12 gram of sodium thiosulphate pentahydrate (0.05 molar) was dissolved in 500 mL distilled water. The two solutions were heated to a temperature of about 45 °C and each were simultaneously added to a precipitation vessel while maintaining the precipitation vessel at a temperature of 45 °C under nitrogen atmosphere and to a pH of about 8. The slurry was agitated for 2 hours and aged for 8 hours. The slurry was then filtered and the wet cake was washed to be substantially free of dissolved salts using de-ionized water. The wet cake was dried under vacuum to a moisture content of less than 7 wt%.

To the 12 litre test water, 1.56 gram of the biocide quencher as prepared above was added and stirred. The concentration of chlorine in the test water was measured at various intervals over 20 minutes.

The data on the concentration of the biocide in the test water as a function of time for Examples 5 to 7 is summarised in Table - 2.

**TABLE - 2**

| | Concentration of biocide in miligram/litre | | |
|---|---|---|---|
| Time, minute | Example -5 | Example - 6 | Example-7 |
| 0 | 12.4 | 12.6 | 10.4 |
| 1 | 5.3 | 7.0 | 3.7 |
| 5 | 3.0 | 4.1 | 1.5 |
| 10 | 1.1 | 1.5 | 0 |
| 15 | 0 | 0.9 | |
| 18 | | 0 | |

The data in Table - 2 indicates that various types of biocide qenchers can be prepared as per the invention using various different methods to achieve the desired controlled concentration of biocide in water.

### Examples 8 and 9: Coagulation-Flocculation compositions comprising a biocide and a biocide quencher of the invention.

### Example - 8:

A composition as shown below was prepared and stored in a two -compartment sachet.
Compartment 1: Calcium hypochlorite (65% average chlorine) : 0.18 gram
Compartment 2: Aluminium sulfate: 2.0 gram; nonionic polyacrylamide: 0.2 gram, Bentonite clay: 1.0 gram; Biocide quencher as prepared in Example 3: 1.2 gram.

When desired to be used, the contents of the two compartment were added simultaneously to a test water which contained the following: 10⁴ cysts, 10⁷ bacteria and 10⁵ virus, 150 mg test dust.

The contents were stirred for 2 minutes and left to stay for 15 minutes.

The water contained 10 ppm by weight chlorine immediately after addition of the composition and no chlorine after 15 minutes. The water was microbiologically pure passing the test of 3 log cyst removal, 6 log bacteria removal and 4 log virus removal.

### Example - 9:

A composition as shown below was prepared and stored in a two -compartment sachet.
Compartment 1: Calcium hypochlorite (65% average chlorine) : 0.36 gram
Compartment 2: Aluminium Sulphate: 2.0 gram; Non-ionic polyacrylamide: 0.2 gram, Bentonite clay: 1.0 gram; Biocide quencher as prepared in Example 3: 2.4 gram.

When desired to be used, the contents of the two compartment were added simultaneously to a test water which contained the following10⁴ cysts, 10⁷ bacteria and 10⁵ virus, 150 mg test dust.

The contents were stirred for 2 minutes and left to stay for 15 minutes.

The water contained 20 ppm by weight chlorine immediately after addition of the composition and no chlorine after 15 minutes. The water was microbiologically pure passing the test of 3 log cyst removal, 6 log bacteria removal and 4 log virus removal.

The invention thus provides for a disinfection composition that ensures that excess disinfectant/biocide left over after efficient disinfection is quenched in a controlled manner.

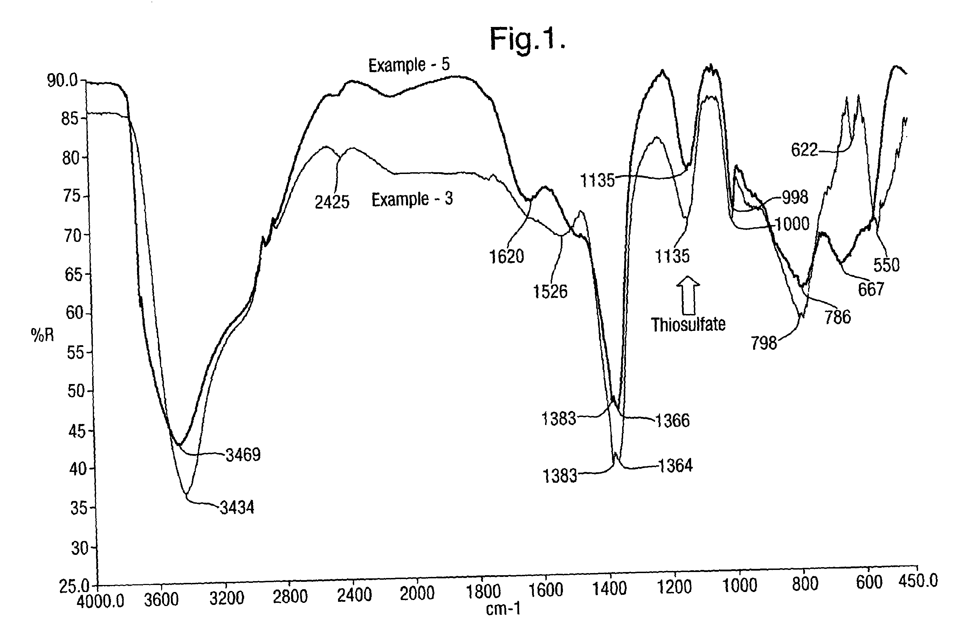

## Claims

1. A disinfection composition comprising:
(i) an oxidising biocide; and
(ii) a delayed release biocide quencher having the general formula
(M₁²⁺)ₓ(M₂³⁺)_{y}(OH)_{2x+2y}(A^{z-})_{y/z}. nH₂O
where, M₁²⁺ is a divalent cation and M₂³⁺ is a trivalent cation, A is an anion which is a reducing agent and x has a value from 0.1 to 10.0, y has a value from 0.1 to 5.0, n has a value between 0 to 10.0, z has a value from 1.0 to 4.0.

2. A composition as claimed in claim 1 wherein the divalent cation is magnesium, zinc or calcium.

3. A composition as claimed in claims 1 or 2 wherein the trivalent cation is aluminium.

4. A composition as claimed in any one of the preceding claims wherein the anion A is ascorbate or thiosulphate.

5. A composition as claimed in any one of the preceding claims wherein said oxidising biocide is a halogen compound.

6. A composition as claimed in any one of the preceding claims wherein the delayed release biocide quencher is further encapsulated in a water soluble polymer.

7. A composition as claimed in any one of the preceding claims comprising a coagulating agent which is a water soluble inorganic metal salt having trivalent cation and a flocculating agent which is a high molecular weight water soluble polymer.

8. A composition as claimed in claim 7 wherein the coagulating agent is polyaluminium chloride, aluminium sulfate or ferric sulfate.

9. A composition as claimed in claim 7 or 8 wherein the flocculating agent is anionically modified or non-ionic polyacrylamide.

10. A composition as claimed in any one of the preceding claims comprising two portions which are spatially separated wherein the first portion comprises the oxidising biocide and the second portion comprises the delayed release biocide quencher.

11. A composition as claimed in any one of the preceding claims wherein the delayed release biocide quencher is prepared by a process comprising a step of reacting a layered double hydroxide (LDH) compound with a reducing agent, said LDH compound is prepared by a precipitation step comprising reacting a salt having trivalent cation and a salt having divalent cation with an alkaline compound.

12. A composition as claimed in claim 11 wherein the alkaline compound is sodium hydroxide and the precipitation reaction is carried out at a temperature in the range of 40 to 50 °C and a pH of 6 to 8 and wherein the LDH compound filtered and washed to be made substantially free of salts is reacted with a reducing agent at a pH of 6 to 8.

13. A composition as claimed in claim 11 or 12 wherein the alkaline compound is sodium hydroxide and the precipitation reaction is carried out at a temperature in the range of 90 to 100 °C and a pH of 9.5 to 11 followed by the step of reaction of the LDH thus formed with the reducing agent at a pH 6 to 8.

14. A method for purifying contaminated water comprising the steps of (i) contacting contaminated water with a composition as claimed in any one of the preceding claims and (ii) separating the insoluble matter from the water.

15. Use of a composition as claimed in any one of the preceding claims 1 to 13 for purifying contaminated water for 6 log bacteria removal, 4 log virus removal and 3 log cyst removal.
